# EUROPÄISCHE PATENTSCHRIFT

(11) **EP 3 559 604 B1**
(45) Veröffentlichungstag und Bekanntmachung des Hinweises auf die Patenterteilung: **17.02.2021**
(21) Anmeldenummer: 17801713.3
(22) Anmeldetag: 22.11.2017
(51) Int. Cl.: G01F 1/58, G01F 1/60

(54) **VERFAHREN ZUM BETREIBEN EINES MAGNETISCH-INDUKTIVEN DURCHFLUSSMESSGERÄTS UND EIN SOLCHES DURCHFLUSSMESSGERÄT**
METHOD FOR OPERATING A MAGNETO-INDUCTIVE FLOW METER AND SUCH A FLOW METER
PROCÉDÉ PERMETTANT DE FAIRE FONCTIONNER UN DÉBITMÈTRE À INDUCTION MAGNÉTIQUE ET DÉBITMÈTRE À INDUCTION MAGNÉTIQUE

(30) Priorität: 20.12.2016 DE 102016124977
(43) Veröffentlichungstag der Anmeldung: 30.10.2019
(73) Patentinhaber: Endress+Hauser Flowtec AG, 4153 Reinach (CH)
(72) Erfinder: KÜNG, Thomas, CH-4142 Münchenstein (CH); BÄHR, Günther, 4106 Therwil (CH)
(74) Vertreter: Andres, Angelika Maria
(86) Internationale Anmeldenummer: PCT/EP2017/080059
(87) Internationale Veröffentlichungsnummer: WO 2018/114190

(56) Entgegenhaltungen:
- EP-A1- 0 969 268
- DE-A1-102013 112 373
- DE-A1-102014 119 453
- US-A- 4 408 497
- US-A- 5 905 206

## Beschreibung

Die Erfindung betrifft ein Verfahren zum Betreiben eines magnetisch-induktiven Durchflussmessgeräts zur Messung der Durchflussgeschwindigkeit oder des Volumendurchflusses eines Mediums in einem Messrohr und ein solches Durchflussmessgerät.

Magnetisch-induktive Durchflussmessgeräte werden bereits seit langer Zeit zur Durchflussmessung eingesetzt. Das Prinzip der magnetisch-induktiven Durchflussmessung basiert auf der Induktion einer durchflussabhängigen elektrischen Spannung in einem leitfähigen, durch ein Messrohr fließendes Medium durch ein Magnetfeld, welches Magnetfeld senkrecht zur Flussrichtung ausgerichtet ist. Das Magnetfeld wird üblicherweise durch ein Spulensystem mit einer oder mehreren Spulen erzeugt. Die durchflussabhängige Spannung wird von mindestens zwei Messelektroden abgegriffen und von einer Messvorrichtung ausgewertet. Somit lässt sich aus der gemessenen Spannung und dem bekannten Magnetfeld der Durchfluss des Mediums durch die Rohrleitung bestimmen. Üblicherweise wird das Medium mit Magnetfeldern wechselnder Polarität beaufschlagt, um Störeffekte zu minimieren, welche unabhängig von einer Anwesenheit eines Magnetfelds zu einer messbaren Spannung zwischen den Messelektroden führen und somit eine Durchflussmessung verfälschen. Die Schrift DE10312058A1 beschreibt ein solches Durchflussmessgerät. Eine weitere Möglichkeit Störeffekte zu erfassen ist, zwischen Phasen mit Magnetfeld Ruhephasen ohne Magnetfeld einzurichten und die Störeffekte zu messen. Dies wird in der Schrift US4597295A vorgeschlagen. Nachteilhaft an beiden Umsetzungen ist die Tatsache, dass nach einem Wechsel zu einem Magnetfeld umgekehrter Polarität bzw. bei einem Wechsel zwischen einer Phase mit Magnetfeld und einer Ruhephase mit einer Durchflussmessung bzw. einer Messung der Störeffekte gewartet werden muss, bis das Durchflussmessgerät einen eingeschwungenen Zustand erreicht. Somit geht wertvolle Zeit verloren, welche nicht für eine Durchflussmessung zur Verfügung steht. Eine mögliche Lösung um die Messzeit zu verringern ist in US 5 905 206 A vorgeschlagen. Aufgabe der Erfindung ist es daher, ein Verfahren zum Betreiben eines magnetisch-induktiven Durchflussmessgeräts und ein solches Durchflussmessgerät vorzuschlagen, durch welche der Zeitverlust minimiert wird.

Die Aufgabe wird gelöst durch ein Verfahren gemäß dem unabhängigen Anspruch 1 sowie durch ein magnetisch-induktives Durchflussmessgerät gemäß dem unabhängigen Anspruch 16.

Bei einem erfindungsgemäßen Verfahren zum Betreiben eines magnetisch-induktiven Durchflussmessgeräts zur Messung der Durchflussgeschwindigkeit oder des Volumendurchflusses eines Mediums in einem Messrohr, welches magnetisch-induktive Durchflussmessgerät umfasst:
ein Messrohr zum Führen des Mediums;
ein Magnetsystem mit mindestens einem Spulensystem zum Erzeugen eines Magnetfelds im Medium, wobei das Magnetfeld im Wesentlichen senkrecht zu einer Messrohrachse steht, wobei das Magnetfeld durch Anlegen einer elektrischen Spulenspannung an das Spulensystem hervorgerufen wird;
mindestens ein Paar im Messrohr angeordnete Messelektroden zum Erfassen einer durch das Magnetfeld induzierten Elektrodenspannung im Medium, welche Elektrodenspannung im Wesentlichen proportional zur Durchflussgeschwindigkeit und zur Feldstärke des Magnetfelds ist;
eine Mess-/Betriebsschaltung zum Betreiben des Magnetsystems und zum Auswerten der Elektrodenspannung,
wird während einer Speisephase das Magnetfeld erzeugt und die Elektrodenspannung erfasst,
wobei die Speisephase eine Messphase aufweist, in welcher Messphase das Magnetfeld im Wesentlichen konstant ist, wobei ein Messwert der Elektrodenspannung während der Messphase zur Berechnung des Durchflusses des Mediums herangezogen wird;
wobei während einer anschließenden Speisephase ein Magnetfeld umgekehrter Polarität erzeugt wird, wobei das Wechseln zwischen Speisephasen das Entstehen eines elektrischen Spannungspulses im Medium verursacht;
wobei der Spannungspuls analysiert wird, um eine Information über einen Verlauf einer Auslenkung der Elektrodenspannung bezüglich eines Endzustands zu erhalten,
wobei der Endzustand ein Zustand eines eingeschwungenen Messsystems ist, welcher Endzustand zur Berechnung eines Durchflusses herangezogen wird.

Das Messsystem umfasst dabei das Magnetsystem sowie das Medium im Bereich des Magnetfelds sowie die Messelektroden mit Zuleitungen zur Mess-/Betriebsschaltung.

Das Magnetsystem kann zusätzlich zu dem mindestens einen Spulensystem auch eine Feldrückführung zum Leiten des Magnetfelds außerhalb des Messrohrs aufweisen. Des Weiteren kann das Magnetsystem mindestens einen Polschuh aufweisen, welcher dazu eingerichtet ist, das Magnetfeld zwischen Spulensystem und Messrohr zu leiten. Das mindestens eine Spulensystem kann jeweils einen Spulenkern aufweisen.

Die Elektrodenspannung entsteht dabei durch eine durch den Durchfluss des Mediums durch das Messrohr durch das Magnetfeld verursachte Ablenkung von Ladungsträgern, wobei die Ablenkungsrichtung von der Polarität der Ladungsträger abhängig ist. Somit entsteht eine Trennung von positiv geladenen von negativ geladenen Ladungsträgern und somit eine elektrische Spannung.

Erfindungsgemäß wird nach Erhalt des Verlaufs der Auslenkung der Verlauf der Elektrodenspannung in Abhängigkeit des Verlaufs der Auslenkung korrigiert.

In einer Ausgestaltung des Verfahrens wird eine gemittelte Auslenkung durch Mittelung der Auslenkung jeweils eines Spannungspulses mindestens zweier Speisephasen berechnet wird, wobei nach Berechnen der gemittelten Auslenkung der Wert der Elektrodenspannung bzw. der Messwert der Elektrodenspannung einer Speisephase korrigiert wird.

In einer Ausgestaltung des Verfahrens wird eine Messung einer ersten Impedanz eines Stromkreises umfassend die Messelektroden sowie das Medium und/oder einer zweiten Impedanz des Mediums durchgeführt,

Erfindungsgemäß wird ein Messwert einer ersten Impedanz des Stromkreises umfassend die Messelektroden sowie Zuleitungen der Messelektroden zur Mess/Betriebsschaltung sowie das Medium und/oder ein Messwert einer zweiten Impedanz des Mediums bestimmt, wobei der Messwert der ersten Impedanz und/oder der Messwert der zweiten Impedanz zur Analyse des Spannungspulses herangezogen wird.

In einer Ausgestaltung des Verfahrens der Messwert der ersten Impedanz mittels der Messelektroden und/oder wobei der Messwert der zweiten Impedanz mittels einer Impedanzsonde bestimmt.

In einer Ausgestaltung des Verfahrens wird die Elektrodenspannung während der Speisephase mindestens zweimal, und insbesondere mindestens zwanzigmal und bevorzugt mindestens fünfzigmal abgetastet wird.

In einer Ausgestaltung des Verfahrens wird der Verlauf des Spannungspulses durch mindestens eine Fitfunktion gefittet,
wobei die Fitfunktion Information über Zeitpunkt und Amplitude eines Spannungspulsmaximums und/oder Verlauf des Amplitudenabfalls des Spannungspulses und/oder Zeitpunkt des Erreichens eines Endzustands und/oder Eigenschaften des Endzustands und/oder eine Pulsbreite des Spannungspulses gibt,
wobei der Verlauf der Auslenkung der Elektrodenspannung bezüglich des Endzustands anhand der durch den Fit gewonnenen Fitparameter bzw. anhand von Fitfunktionsparametern beschrieben wird.

Die Fitfunktion kann dabei unter rein mathematischen Gesichtspunkten ausgewählt sein. Es können aber auch physikalische oder technische Gegebenheiten bei der Auswahl der Fitfunktion und/oder bei einer Einschränkung von Parametern der Fitfunktion herangezogen werden.

In einer Ausgestaltung des Verfahrens greift der Fit zumindest in einem ersten Zeitintervall auf eine Funktion mit einem globalen Extremum, beispielsweise eine Gaußfunktion zurück.

In einer Ausgestaltung des Verfahrens greift der Fit zumindest in einem zweiten Zeitintervall auf eine monoton fallende Funktion, beispielsweise eine Potenzfunktion zurück.

In einer Ausgestaltung des Verfahrens werden die Fitfunktionen bzw. Fitfunktionsparameter aus einer Look-Up-Table gewählt.

In einer Ausgestaltung des Verfahrens wird mindestens ein gerätetypischer bzw. exemplartypischer Parameter beim Fitten herangezogen.

In einer Ausgestaltung des Verfahrens wird eine Messung einer ersten Impedanz einer Stromschleife umfassend die Messelektroden sowie das Medium und/oder einer zweiten Impedanz des Mediums beim Fitten.

In einer Ausgestaltung des Verfahrens weichen die Beträge der Magnetfelder der Messphasen benachbarter Speisephasen weniger als 1% und insbesondere weniger als 0.1 % voneinander ab.

In einer Ausgestaltung des Verfahrens umfassen die der Berechnung der gemittelten Auslenkung zugrundeliegenden Speisephasen der ersten Speisephase vorausgehen oder die erste Speisephase.

In einer Ausgestaltung des Verfahrens gehen die der Berechnung der gemittelten Auslenkung zugrundeliegenden Speisephasen der ersten Speisephase zumindest teilweise voraus,
wobei die der Berechnung der gemittelten Auslenkung zugrundeliegenden Speisephasen der ersten Speisephase zumindest teilweise nachfolgen.

In einer Ausgestaltung des Verfahrens wird eine Differenz von korrigierten Messwerten der Elektrodenspannung bzw. eine Differenz korrigierter Elektrodenspannungen der Messphasen zweier aufeinanderfolgender Speisephasen dazu verwendet, einen Durchflussmesswert zu ermitteln.

Ein erfindungsgemäßes magnetisch-induktives Durchflussmessgerät zur Messung der Durchflussgeschwindigkeit oder des Volumendurchflusses eines Mediums in einem Messrohr umfasst:
ein Messrohr, welches dazu eingerichtet ist, das Medium zu führen;
ein Magnetsystem mit mindestens einem Spulensystem, welches Magnetsystem dazu eingerichtet ist, ein Magnetfeld im Medium zu erzeugen, wobei das Magnetfeld im Wesentlichen senkrecht zu einer Messrohrachse steht;
mindestens ein Paar im Messrohr angeordnete Messelektroden, welche dazu eingerichtet sind, eine durch das Magnetfeld induzierte Spannung im Medium zu erfassen, welche Spannung im Wesentlichen proportional zur Durchflussgeschwindigkeit und zur Feldstärke des Magnetfelds ist;
eine Mess-/Betriebsschaltung, welche dazu eingerichtet ist, das erfindungsgemäße Verfahren umzusetzen.

In einer Ausgestaltung des Durchflussmessgeräts weist das Durchflussmessgerät eine Impedanzsonde zum Erfassen der zweiten Impedanz des Mediums auf.

In einer Ausgestaltung des Durchflussmessgeräts weist die Mess/Betriebsschaltung eine Schnittstelle zur Übermittelung bzw. Annahme von Information bezüglich einer extern bestimmten Impedanz des Mediums auf.

In einer Ausgestaltung umfasst das Magnetsystem mindestens eine Feldrückführung, welche dazu eingerichtet ist, das Magnetfeld außerhalb des Messrohrs zwischen der dem Spulensystem gegenüberliegenden Messrohrseite und dem Spulensystem zumindest teilweise zu führen.

Im Folgenden wird die Erfindung anhand von Ausführungsbeispielen beschrieben.
Fig. 1 skizziert einen schematischen Verfahrensablauf zum Betreiben eines magnetisch-induktiven Durchflussmessgeräts.
Fig. 2 skizziert einen beispielshaften Ausschnitt aus Verläufen von Magnetfeldern und Elektrodenspannungen.
Fig. 3 zeigt einen beispielhaften Querschnitt durch ein erfindungsgemäßes magnetisch-induktives Durchflussmessgerät.

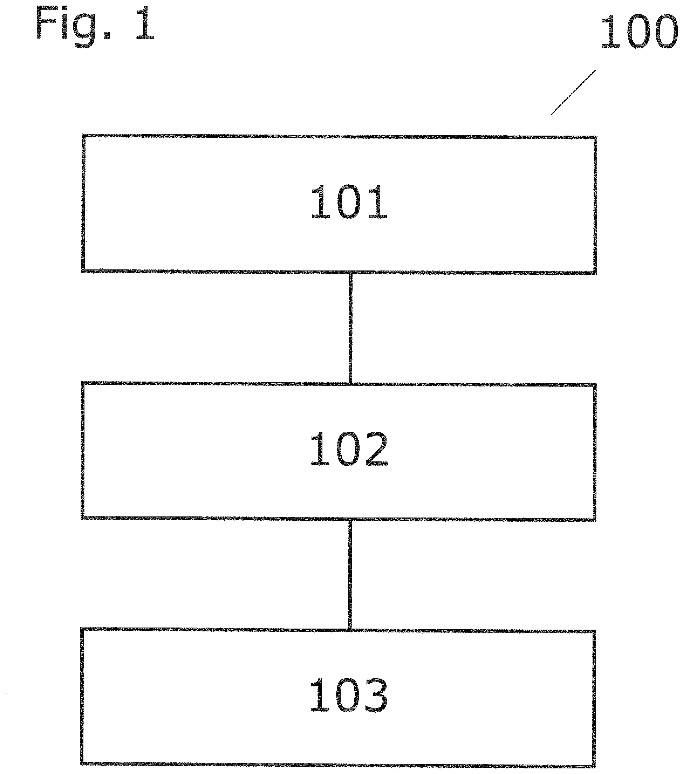

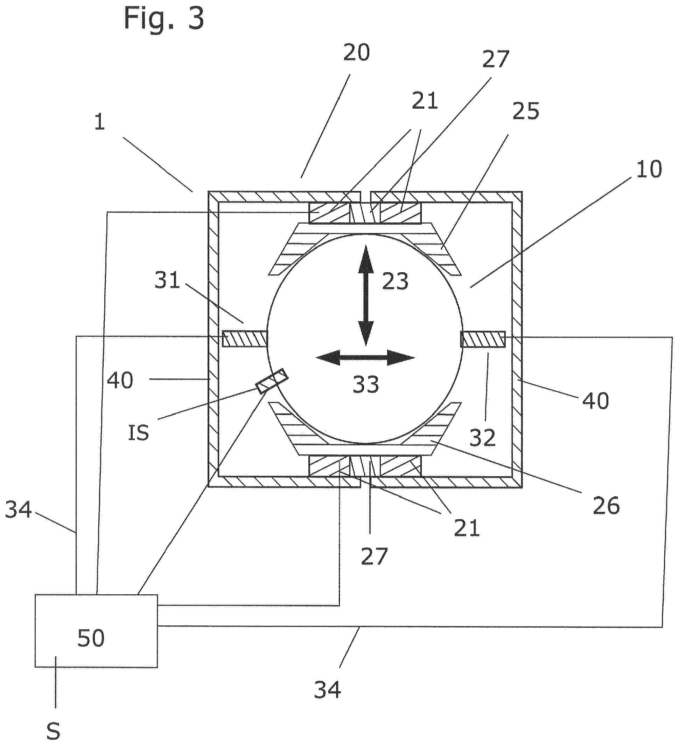

Fig. 1 skizziert einen Ablauf eines erfindungsgemäßen Verfahrens 100 zum Betreiben eines magnetisch-induktiven Durchflussmessgeräts. Ein solches Durchflussmessgerät umfasst wie in Fig. 3 beschrieben:
   ein Messrohr zum Führen des Mediums;
   ein Magnetsystem mit mindestens einem Spulensystem zum Erzeugen eines Magnetfelds im Medium, wobei das Magnetfeld im Wesentlichen senkrecht zu einer Messrohrachse steht, wobei das Magnetfeld durch Anlegen einer elektrischen Spulenspannung an das Spulensystem hervorgerufen wird;
   mindestens ein Paar im Messrohr angeordnete Messelektroden zum Erfassen einer durch das Magnetfeld induzierten Elektrodenspannung im Medium, welche Elektrodenspannung im Wesentlichen proportional zur Durchflussgeschwindigkeit und zur Feldstärke des Magnetfelds ist;
   eine Mess-/Betriebsschaltung zum Umsetzen des erfindungsgemäßen Verfahrens.

Während des Betriebs des Durchflussmessgeräts wird während einer Speisephase das Magnetfeld erzeugt und die Elektrodenspannung erfasst. Die Speisephase weist eine Messphase auf, in welcher Messphase das Magnetfeld im Wesentlichen konstant ist, wobei ein Messwert der Elektrodenspannung während der Messphase zur Berechnung des Durchflusses des Mediums herangezogen wird.

In einem ersten erfindungsgemäßen Verfahrensschritt 101 wird während einer anschließenden Speisephase ein Magnetfeld umgekehrter Polarität erzeugt, wobei das Wechseln zwischen Speisephasen das Entstehen eines elektrischen Spannungspulses im Medium verursacht.

In einem zweiten erfindungsgemäßen Verfahrensschritt 102 wird Spannungspuls analysiert, um eine Information über einen Verlauf einer Auslenkung der Elektrodenspannung bezüglich eines Endzustands zu erhalten. Der Endzustand ist dabei ein Zustand eines eingeschwungenen Messsystems ist, wobei das Messsystem das Magnetsystem sowie das Medium im Bereich des Magnetfelds sowie die Messelektroden mit Zuleitungen zur Mess-/Betriebsschaltung umfasst.

In einem dritten erfindungsgemäßen Verfahrensschritt 103 wird der Endzustand zur Berechnung eines Durchflusses herangezogen.

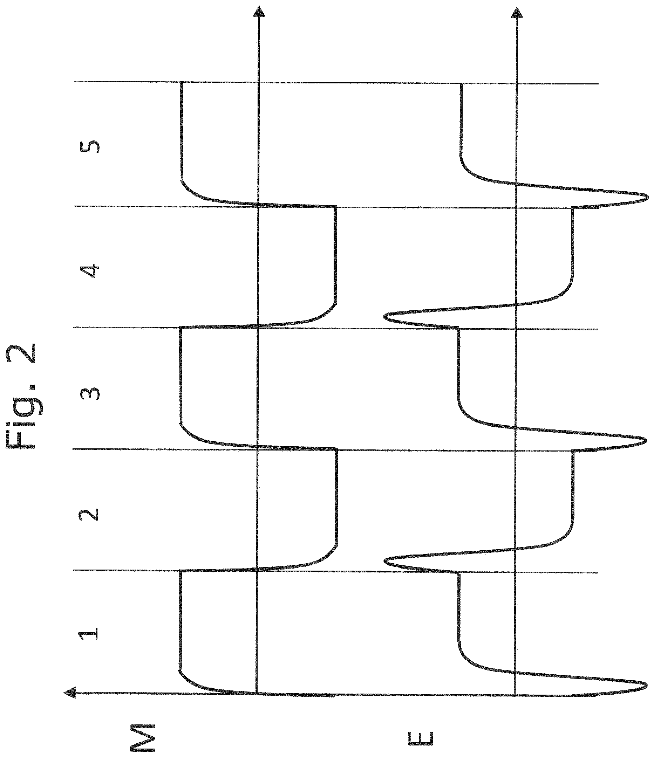

Fig. 2 skizziert einen beispielshaften und schematischen Ausschnitt aus Verläufen von Magnetfeldern und Elektrodenspannungen über eine Zeit t über mehrere Speisephasen hinweg, wobei eine obere Kurve M den Verlauf von Magnetfeldern während Speisephasen 1 bis 5 zeigt, und wobei eine untere Kurve E den Verlauf von Elektrodenspannungen während der Speisephasen 1 bis 5 zeigt. Der Verlauf der Magnetfelder bzw. Elektrodenspannungen während einer einzelnen Phase ist geprägt von einem Einschwingen in einen Endzustand zu Beginn der Phase und von einem Bleiben im Endzustand nach Beenden des Einschwingens, wobei die Einschwingdauer der Magnetfelder kürzer ist als die Einschwingdauer der Elektrodenspannungen. Dies ist dadurch begründet, dass die Elektrodenspannungen durchflussabhängig auf die Magnetfelder reagieren, wobei diese Reaktionen dann des Weiteren Grenzschichteffekte an den Grenzflächen Medium - Messelektrode hervorrufen, welche eine von der Leitfähigkeit des Mediums abhängige Einschwingdauer aufweisen, welche häufig länger ist, als die Einschwingdauer der Magnetfelder. Der Wert der Elektrodenspannung während des Endzustands ist dabei durch den aktuellen Durchfluss des Mediums gegeben. Während einer Speisephase wird das Medium durch das Magnetsystem mit einem zumindest abschnittsweise konstanten Magnetfeld beaufschlagt, wobei das Magnetfeld durch Ansteuern eines Spulensystems mit einem Spulenstrom erzeugt wird.

Zur Messung eines Durchflusses wird eine Elektrodenspannung bzw. ein Messwert einer Elektrodenspannung zumindest während eines Endzustands einer Speisephase herangezogen. Insbesondere wird zur Messung des Durchflusses eine Differenz von Messwerten der Elektrodenspannung bzw. eine Differenz von Elektrodenspannungen zweier aufeinanderfolgender Speisephasen dazu verwendet, einen Durchflussmesswert zu ermitteln.

Die Elektrodenspannung nach einem Schaltvorgang des Magnetsystems hängt nicht nur von der Dynamik des Magnetsystems, sondern auch vom dynamischen Verhalten der Grenzschichten ab. Die Dynamik der Elektrodenspannung wird durch das Magnetfeld, sowie der Änderung des Magnetfelds bei Phasenwechsel und durch die Wirkung der Grenzschicht an der Grenzfläche Messelektrode - Medium beeinflusst. Mit Umschalten zeigt die Elektrodenspannung einen Spannungspuls, welcher in einen Zustand mit im Wesentlichen konstanter Spannung abklingt, wobei das Abklingen unter anderem aus einem Abklingen der Spannung über der Grenzschicht resultiert, wobei der Spannungspuls als Resultat der Änderung des Magnetfelds und der Ladung einer Grenzschichtkapazität eine Störung der Elektrodenspannung darstellt. Die Polarität eines Spannungspulses ist abhängig von der Polarität der Änderung des Magnetfelds mit Speisephasenwechsel.

Bei Verfahren zum Betreiben eines magnetisch-induktiven Durchflussmessgeräts nach dem Stand der Technik wird mit dem Erfassen einer Elektrodenspannung bzw. eines Messwerts einer Elektrodenspannung zur Berechnung eines Durchflusses gewartet, bis das Einschwingen der Elektrodenspannung erfolgt ist, woraus folgt, dass die Einschwingphase für eine Durchflussmessung nutzlos ist.

Eine Analyse des Spannungsverlaufs der Elektrodenspannung während einer Speisephase ermöglicht den Erwerb einer Auslenkung der Elektrodenspannung gegenüber dem Endzustand des Messsystems, welcher Endzustand im Wesentlichen durch den Durchfluss des Mediums sowie durch die Feldstärke des Magnetfelds bestimmt ist. Ein Fitten des Verlaufs der Elektrodenspannung mit einer geeigneten Fitfunktion ermöglicht beispielsweise eine direkte Berechnung des Endzustands als ein Fitparameter mit dazugehörigen Unsicherheiten. Es ist auch denkbar, von einem gemessenen Verlauf der Elektrodenspannung eine durch einen Fit bestimmte Funktion abzuziehen bzw. zu korrigieren. In diesem Fall ist der Verlauf der Elektrodenspannung bei Abwesenheit weiterer elektrodenspannungsverfälschender Effekte bei im Wesentlichen konstantem Durchfluss zumindest über einen Teil der Speisephase im Wesentlichen konstant. Somit kann ein Endwert beispielsweise durch Mitteln von einzelnen Messwerten der Elektrodenspannung aus dem konstanten Teil bestimmt werden. Bei schnellen Änderungen des Durchflusses während der Speisephase kann die Elektrodenspannung im eingeschwungenen Zustand auch ansteigen oder abfallen. Insbesondere bei sehr kurzen Speisephasen, bzw. hohen Umschaltfrequenzen erreicht die Elektrodenspannung häufig nicht einen Endzustand, so dass bei den Lehren des Stands der Technik eine Durchflussmessung falsch wäre. In diesem Fall kann durch ein erfindungsgemäßes Einbeziehen eines Fits auch ohne Erreichen eines Endzustands eine aussagekräftige Information über den Endzustand gewonnen werden.

Bei der Analyse können auch Spannungspulse mehrerer Speisephasen gemittelt werden, bevor ein Fit durchgeführt wird. Dadurch kann das Signal-zu-Rauschen-Verhältnis verbessert werden, so dass durch ein Fitten Parameter mit geringeren Unsicherheiten gewonnen werden können. Alternativ können auch die Fits von Spannungspulsen mehrerer Speisephasen gemittelt werden, bevor eine Aussage über einen Endzustand eines Verlaufs einer Elektrodenspannung einer Speisephase gegeben wird. Das Fitten kann auch physikalisch-technische Randbedingungen berücksichtigen. Beispielsweise kann bei der Auswahl der Fitfunktion bzw. von Parametern oder Parameterbereiche der Fitfunktion ein Messwert einer ersten Impedanz einer Stromschleife umfassend die Messelektroden sowie das Medium und/oder ein Messwert einer zweiten Impedanz des Mediums herangezogen werden. Weitere Randbedingungen können durch mindestens einen gerätetypischen bzw. exemplartypischen Parameter gegeben sein. Durch den Speisephasenwechsel weisen Spannungspulse benachbarter Speisephasen unterschiedliche Polarität auf. Entweder man berücksichtigt beim Mitteln nur Spannungspulse gleicher Polarität, oder man korrigiert die Polarität. Die Auswahl der Fitfunktion bzw. der Fitfunktionsparameter kann auch physikalisch-technische Randbedingungen berücksichtigen.

Beispielsweise kann eine zum Fitten des Verlaufs der Elektrodenspannung verwendete Funktion aus einer Look-Up-Table herausgesucht werden, in welcher Look-Up-Table mindestens ein gerätetypische und/oder mindestens ein exemplartypischer und/oder mindestens ein applikationsspezifischer Parameter abgelegt sind, welche Parameter mit geeigneten Fitfunktionen und/oder Fitfunktionsparameter verknüpft sind.

Die Verläufe der einzelnen Magnetfelder sind beispielhaft. Insbesondere kann zu Beginn einer Phase eine Überspannung an das Spulensystem angelegt werden, damit das Magnetfeld schneller einen Sollzustand erreicht. In diesem Fall kann ein tatsächlicher Magnetfeldverlauf von den in Fig. 2 gezeigten Verläufen abweichen.

Fig. 3 skizziert einen Querschnitt durch ein erfindungsgemäßes magnetisch-induktives Durchflussmessgerät 1 mit einem Messrohr 10; einem Magnetsystem 20 mit Spulensystemen 21 und 22 mit jeweils einem Spulenkern 27, Polschuhen 25 und 26; sowie Messelektroden 31 und 32 zum Erfassen einer im Medium induzierten Spannung. Das Magnetsystem beaufschlagt das Medium im Messrohr 10 mit einem Magnetfeld, welches in Richtung des Pfeils 23 ausgerichtet ist. Das Magnetfeld sowie der Fluss des Mediums durch das Messrohr sorgen für das Entstehen einer Elektrodenspannung in Richtung des Pfeils 33. Das magnetisch-induktive Durchflussmessgerät kann des Weiteren eine Feldrückführung 40 umfassen und/oder eine Impedanzsonde 60 umfassen. Die Messelektroden 31, 32 sowie das Spulensystem 21, 22 sowie die Impedanzsonde sind mit einer Mess-/Betriebsschaltung 50 verbunden, welche Mess-/Betriebsschaltung 50 dazu eingerichtet ist, das Spulensystem, die Messelektroden und gegebenenfalls die Impedanzsonde zu betreiben. Die Impedanzsonde ist dazu eingerichtet, die Impedanz des Mediums zu erfassen. Alternativ oder ergänzend zur Impedanzssonde 60 kann die Mess/Betriebsschaltung 50 eine Schnittstelle S zur Übermittelung bzw. Annahme von Information bezüglich einer extern bestimmten Impedanz des Mediums aufweisen.

### Bezugszeichenliste

- 1: Durchflussmessgerät
- 10: Messrohr
- 20: Magnetsystem
- 21, 22: Spulensystem
- 23: Richtung des Magnetfelds
- 25, 26: Polschuh
- 27: Spulenkern
- 31, 32: Messelektrode
- 33: Richtung der Elektrodenspannung
- 34: Zuleitung
- 40: Feldrückführung
- 50: Mess-/Betriebsschaltung
- 60: Impedanzsonde
- 100: Verfahren zum Betreiben eines Messgeräts
- 101: erster Verfahrensschritt
- 102: zweiter Verfahrensschritt
- 103: dritter Verfahrensschritt
- M: Verlauf der Magnetfelder
- E: Verlauf der Elektrodenspannungen
- S: Schnittstelle

## Patentansprüche

1. Verfahren (100) zum Betreiben eines magnetisch-induktiven Durchflussmessgeräts (1) zur Messung der Durchflussgeschwindigkeit oder des Volumendurchflusses eines Mediums in einem Messrohr (10),
welches magnetisch-induktive Durchflussmessgerät (1) umfasst:
ein Messrohr (10) zum Führen des Mediums;
ein Magnetsystem (20) mit mindestens einem Spulensystem (21, 22) zum Erzeugen eines Magnetfelds im Medium, wobei das Magnetfeld im Wesentlichen senkrecht zu einer Messrohrachse steht, wobei das Magnetfeld durch Anlegen einer elektrischen Spulenspannung an das Spulensystem (21, 22) hervorgerufen wird;
mindestens ein Paar im Messrohr (10) angeordnete Messelektroden zum Erfassen einer durch das Magnetfeld induzierten Elektrodenspannung im Medium, welche Elektrodenspannung im Wesentlichen proportional zur Durchflussgeschwindigkeit und zur Feldstärke des Magnetfelds ist;
eine Mess-/Betriebsschaltung (50) zum Betreiben des Magnetsystems (20) und zum Auswerten der Elektrodenspannung,
wobei während einer Speisephase das Magnetfeld erzeugt und die Elektrodenspannung erfasst wird,
wobei die Speisephase eine Messphase aufweist, in welcher Messphase das Magnetfeld im Wesentlichen konstant ist, wobei ein Messwert der Elektrodenspannung während der Messphase zur Berechnung des Durchflusses des Mediums herangezogen wird
wobei einer Endzustand ein Zustand eines eingeschwungenen Messsystems ist, welcher Endzustand zur Berechnung des Durchflusses des Mediums herangezogen wird,
wobei während einer anschließenden Speisephase ein Magnetfeld umgekehrter Polarität erzeugt wird,
**dadurch gekennzeichnet**
**dass** das Wechseln zwischen Speisephasen das Entstehen eines elektrischen Spannungspulses im Medium verursacht;
wobei der Spannungspuls analysiert wird, um eine Information über einen Verlauf einer Auslenkung der Elektrodenspannung bezüglich des Endzustands zu erhalten,
wobei ein Messwert einer ersten Impedanz eines Stromkreises umfassend die Messelektroden sowie das Medium oder einer zweiten Impedanz des Mediums bestimmt wird,
wobei der Messwert der ersten Impedanz oder der Messwert der zweiten Impedanz zur Analyse des Spannungspulses herangezogen wird,
wobei der Verlauf der Elektrodenspannung in Abhängigkeit des Verlaufs der Auslenkung korrigiert wird.

2. Verfahren (100) nach Anspruch 1,
wobei eine gemittelte Auslenkung durch Mittelung der Auslenkung jeweils eines Spannungspulses mindestens zweier Speisephasen berechnet wird, wobei mit der gemittelten Auslenkung der Wert der Elektrodenspannung bzw. der Messwert der Elektrodenspannung einer Speisephase korrigiert wird.

3. Verfahren (100) nach Anspruch 2,
wobei der Messwert der ersten Impedanz mittels der Messelektroden und/oder wobei der Messwert der zweiten Impedanz mittels einer Impedanzsonde bestimmt wird.

4. Verfahren (100) nach einem der vorigen Ansprüche,
wobei die Elektrodenspannung während der Speisephase mindestens zweimal, und insbesondere mindestens zwanzigmal und bevorzugt mindestens fünfzigmal abgetastet wird.

5. Verfahren (100) nach einem der vorigen Ansprüche,
wobei der Verlauf des Spannungspulses durch mindestens eine Fitfunktion gefittet wird,
wobei die Fitfunktion Information über Zeitpunkt und Amplitude eines Spannungspulsmaximums und/oder Verlauf des Amplitudenabfalls des Spannungspulses und/oder Zeitpunkt des Erreichens eines Endzustands und/oder Eigenschaften des Endzustands und/oder eine Pulsbreite des Spannungspulses gibt,
wobei der Verlauf der Auslenkung der Elektrodenspannung bezüglich des Endzustands anhand der durch den Fit gewonnenen Fitparameter bzw. anhand von Ersatzfunktionsparametern beschrieben wird.

6. Verfahren (100) nach Anspruch 5,
wobei der Fit zumindest in einem ersten Zeitintervall auf eine Funktion mit einem globalen Extremum, beispielsweise eine Gaußfunktion zurückgreif.

7. Verfahren (100) nach einem der Ansprüche 5 oder 6,
wobei der Fit zumindest in einem zweiten Zeitintervall auf eine monoton fallende Funktion, beispielsweise eine Potenzfunktion zurückgreift.

8. Verfahren (100) nach einem der Ansprüche 5 bis 7,
wobei die Fitfunktionen bzw. Fitfunktionsparameter aus einer Look-Up-Table gewählt werden.

9. Verfahren (100) nach einem der Ansprüche 5 bis 8,
wobei mindestens gerätetypischer und/oder ein exemplartypischer und/oder ein applikationsspezifischer Parameter beim Fitten bzw. bei der Auswahl der Fitfunktion herangezogen wird.

10. Verfahren (100) nach einem der Ansprüche 5 bis 9,
wobei ein Messwert einer ersten Impedanz eines Stromkreises umfassend die Messelektroden (31, 32) sowie Zuleitungen (34) der Messelektroden zur Mess/Betriebsschaltung (50) sowie das Medium und/oder einer zweiten Impedanz des Mediums beim Fitten bzw. bei einer Auswahl der Fitfunktion herangezogen wird.

11. Verfahren (100) nach einem der vorigen Ansprüche,
wobei der Messwert der ersten Impedanz mittels der Messelektroden und/oder wobei der Messwert der zweiten Impedanz mittels einer Impedanzsonde (60) bestimmt wird.

12. Verfahren (100) nach einem der vorigen Ansprüche,
wobei die Beträge der Magnetfelder der Messphasen benachbarter Speisephasen weniger als 1% und insbesondere weniger als 0.1 % voneinander abweichen.

13. Verfahren (100) nach einem der Ansprüche 2 bis 12,
wobei die der Berechnung der gemittelten Auslenkung zugrundeliegenden Speisephasen der ersten Speisephase vorausgehen oder die erste Speisephase umfassen.

14. Verfahren (100) nach einem der Ansprüche 2 bis 13,
wobei die der Berechnung der gemittelten Auslenkung zugrundeliegenden Speisephasen der ersten Speisephase zumindest teilweise vorausgehen,
wobei die der Berechnung der gemittelten Auslenkung zugrundeliegenden Speisephasen der ersten Speisephase zumindest teilweise nachfolgen.

15. Verfahren (100) nach einem der vorigen Ansprüche,
wobei eine Differenz von Messwerten der Elektrodenspannung bzw. eine Differenz Elektrodenspannungen der Messphasen zweier aufeinanderfolgender Speisephasen dazu verwendet wird, einen Durchflussmesswert zu ermitteln.

16. Magnetisch-induktives Durchflussmessgerät (1) zur Messung der Durchflussgeschwindigkeit oder des Volumendurchflusses eines Mediums in einem Messrohr (10) umfassend:
ein Messrohr, welches dazu eingerichtet ist, das Medium zu führen;
ein Magnetsystem mit mindestens einem Spulensystem (21, 22), welches Magnetsystem (20) dazu eingerichtet ist, ein Magnetfeld im Medium zu erzeugen, wobei das Magnetfeld im Wesentlichen senkrecht zu einer Messrohrachse steht;
mindestens ein Paar im Messrohr (10) angeordnete Messelektroden (31, 32), welche dazu eingerichtet sind, eine durch das Magnetfeld induzierte Spannung im Medium zu erfassen, welche Spannung im Wesentlichen proportional zur Durchflussgeschwindigkeit und zur Feldstärke des Magnetfelds ist;
eine Mess-/Betriebsschaltung (50), welche dazu eingerichtet ist, das Verfahren (100) nach Anspruch 1 umzusetzen.

17. Durchflussmessgerät (1) nach Anspruch 16,
wobei das Durchflussmessgerät eine Impedanzsonde (60) zum Erfassen der zweiten Impedanz des Mediums aufweist, wobei die Mess-/Betriebsschaltung (50) dazu eingerichtet ist, die Impedanzsonde zu betreiben.

18. Durchflussmessgerät (1) nach Anspruch 16 oder 17,
wobei die Mess/Betriebsschaltung (50) eine Schnittstelle (S) zur Übermittelung bzw. Annahme von Information bezüglich einer extern bestimmten Impedanz des Mediums aufweist.

## Claims

1. Procedure (100) for operating an electromagnetic flowmeter (1) designed to measure the flow velocity or the volume flow of a medium in a measuring tube (10),
said electromagnetic flowmeter (1) comprising:
a measuring tube (10) to conduct the medium;
a magnet system (20) with at least a coil system (21, 22) designed to generate a magnetic field in the medium, wherein the magnetic field is essentially perpendicular to a measuring tube axis, wherein the magnetic field is produced by the application of an electrical coil voltage to the coil system (21, 22);
at least a pair of measuring electrodes, arranged in the measuring tube (10), designed to measure an electrode voltage, induced by the magnetic field, in the medium, said electrode voltage being essentially proportional to the flow velocity and the intensity of the magnetic field;
a measurement/operation circuit (50) designed to operate the magnet system (20) and evaluate the electrode voltage,
wherein the magnetic field is generated during a feed phase and the electrode voltage is measured,
wherein the feed phase has a measurement phase in which the magnetic field is essentially constant, wherein a value of the electrode voltage measured during the measurement phase is used to calculate the flow of the medium wherein a final state is a state of a stabilized measuring system, said final state being used to calculate the flow of medium,
wherein a magnetic field of inverse polarity is generated during a subsequent feed phase,
**characterized in that**
the switch between feed phases causes an electrical voltage pulse to be produced in the medium;
wherein the voltage pulse is analyzed to obtain information on the course of a deviation of the electrode voltage in relation to the final state,
wherein a measured value of a first impedance of an electrical circuit comprising the measuring electrodes and the medium or a second impedance of the medium is determined,
wherein the measured value of the first impedance or the measured value of the second impedance is used to analyze the voltage pulse,
wherein the course of the electrode voltage is corrected depending on the course of the deviation.

2. Procedure (100) as claimed in Claim 1,
wherein an averaged deviation is calculated by averaging the deviation of a voltage pulse of at least two feed phases, wherein the value of the electrode voltage or the measured value of the electrode voltage of a feed phase is corrected with the averaged deviation.

3. Procedure (100) as claimed in Claim 2,
wherein the measured value of the first impedance is determined by means of the measuring electrodes and/or
wherein the measured value of the second impedance is determined by means of an impedance probe.

4. Procedure (100) as claimed in one of the previous claims,
wherein, during the feed phase, the electrode voltage is scanned at least twice, and especially at least twenty times and preferably at least fifty times.

5. Procedure (100) as claimed in one of the previous claims,
wherein the course of the voltage pulse is fitted by at least a fit function,
wherein the fit function provides information regarding the time and amplitude of a voltage pulse maximum and/or the course of an amplitude drop of the voltage pulse and/or the time a final state is reached and/or properties of the final state and/or a pulse width of the voltage pulse,
wherein the course of the deviation of the electrode voltage with regard to the final state is described using the fit parameters obtained by the fit or using the replacement function parameters.

6. Procedure (100) as claimed in Claim 5,
wherein, at least in a first time interval, the fit has recourse to a function with a global extremum global, for example a Gauss function.

7. Procedure (100) as claimed in one of the Claims 5 or 6,
wherein, at least in a second time interval, the fit has recourse to a function that drops monotonically, for example a power function.

8. Procedure (100) as claimed in one of the Claims 5 to 7,
wherein the fit functions or fit function parameters are selected from a look-up table.

9. Procedure (100) as claimed in one of the Claims 5 to 8,
wherein at least a parameter that is typical of the device and/or typical of the specimen and/or specific to the application is used during fitting or during the selection of the fit function.

10. Procedure (100) as claimed in one of the Claims 5 to 9,
wherein a measured value of a first impedance of an electrical circuit comprising the measuring electrodes (31, 32) and feed lines (34) of the measuring electrodes for the measurement/operation circuit (50) and the medium and/or a second impedance of the medium are used during fitting or during the selection of the fit function.

11. Procedure (100) as claimed in one of the previous claims,
wherein the measured value of the first impedance is determined by means of the measuring electrodes and/or
wherein the measured value of the second impedance is determined by means of an impedance probe (60).

12. Procedure (100) as claimed in one of the previous claims,
wherein the values of the magnetic fields of the measurement phases of neighboring feed phases deviate from one another by less than 1 % and particularly by less than 0.1 %.

13. Procedure (100) as claimed in one of the Claims 2 to 12,
wherein the feed phases forming the basis for the calculation of the averaged deviation precede the first feed phase or comprise the first feed phase.

14. Procedure (100) as claimed in one of the Claims 2 to 13,
wherein the feed phases forming the basis for the calculation of the averaged deviation at least partially precede the first feed phase,
wherein the feed phases forming the basis for the calculation of the averaged deviation at least partially follow the first feed phase.

15. Procedure (100) as claimed in one of the previous claims,
wherein a difference of measured values of the electrode voltage or a difference of electrode voltages of the measuring phases of two consecutive feed phases are used to determine a flow measured value.

16. Electromagnetic flowmeter (1) for measuring the flow velocity or the volume flow of a medium in a measuring tube (10), comprising:
a measuring tube, which is designed to conduct medium;
a magnet system (20) with at least a coil system (21, 22), wherein said magnet system is designed to generate a magnetic field in the medium, the magnetic field being essentially perpendicular to a measuring tube axis;
at least a pair of measuring electrodes (31, 32) arranged in the measuring tube (10), said pair being designed to measure a voltage inducted by the magnetic field in the medium, said electrode voltage being essentially proportional to the flow velocity and the intensity of the magnetic field;
a measurement/operation circuit (50), said circuit being designed to implement the procedure (100) as claimed in Claim 1.

17. Flowmeter (1) as claimed in Claim 16,
wherein the flowmeter comprises an impedance probe (60) designed to measure the second impedance of the medium, wherein the measurement/operation circuit (50) is designed to operate the impedance probe.

18. Flowmeter (1) as claimed in Claim 16 or 17,
wherein the measurement/operation circuit (50) comprises an interface (S) to transmit or receive information regarding an impedance of the medium determined externally.

## Revendications

1. Procédé (100) destiné à l'exploitation d'un débitmètre magnéto-inductif (1) destiné à la mesure de la vitesse d'écoulement ou du débit volumique d'un produit dans un tube de mesure (10),
lequel débitmètre magnéto-inductif (1) comprend :
un tube de mesure (10) destiné à guider le produit ;
un système magnétique (20) avec au moins un système de bobines (21, 22) destiné à générer un champ magnétique dans le produit, le champ magnétique étant pour l'essentiel perpendiculaire à un axe de tube de mesure, le champ magnétique étant engendré par l'application d'une tension de bobine au système de bobines (21, 22) ;
au moins une paire d'électrodes de mesure, disposées dans le tube de mesure (10), destinée à la mesure d'une tension d'électrode induite par le champ magnétique dans le produit, laquelle tension d'électrode est pour l'essentiel proportionnelle à la vitesse d'écoulement et à l'intensité du champ magnétique ;
un circuit de mesure / commande (50) destiné à la commande du système magnétique (20) et à l'évaluation de la tension d'électrode,
le champ magnétique étant généré pendant une phase d'alimentation et la tension d'électrode étant mesurée,
la phase d'alimentation présentant une phase de mesure, phase de mesure dans laquelle le champ magnétique est pour l'essentiel constant, une valeur de la tension d'électrode mesurée pendant la phase de mesure étant utilisée pour le calcul du débit du produit
un état final étant un état d'un système de mesure en régime établi, lequel état final est utilisé pour le calcul du débit du produit,
un champ magnétique de polarité inverse étant généré pendant une phase d'alimentation consécutive,
**caractérisé**
**en ce que** le changement entre les phases d'alimentation provoque l'apparition d'une impulsion de tension électrique ;
l'impulsion de tension étant analysée pour obtenir une information sur l'allure d'une déviation de la tension d'électrode concernant l'état final,
une valeur mesurée d'une première impédance d'un circuit électrique comprenant les électrodes de mesure ainsi que le produit ou d'une deuxième impédance du produit étant déterminée,
la valeur mesurée de la première impédance ou la valeur mesurée de la deuxième impédance étant utilisée pour l'analyse de l'impulsion de tension,
l'allure de la tension d'électrode étant corrigée en fonction de l'allure de la déviation.

2. Procédé (100) selon la revendication 1,
pour lequel une déviation moyenne est calculée par le moyennage de la déviation respectivement d'une impulsion de tension d'au moins deux phases d'alimentation, la valeur de la tension d'électrode ou la valeur mesurée de la tension d'électrode d'une phase d'alimentation étant corrigée avec la déviation moyennée.

3. Procédé (100) selon la revendication 2,
pour lequel la valeur mesurée de la première impédance est déterminée au moyen des électrodes de mesure et/ou
pour lequel la valeur mesurée de la deuxième impédance est déterminée au moyen d'une sonde d'impédance.

4. Procédé (100) selon l'une des revendications précédentes,
pour lequel la tension d'électrode est échantillonnée pendant la phase d'alimentation au moins deux fois, et notamment au moins vingt fois et de préférence au moins cinquante fois.

5. Procédé (100) selon l'une des revendications précédentes,
pour lequel l'allure de l'impulsion de tension est adaptée par au moins une fonction d'adaptation,
la fonction d'adaptation donnant des informations sur l'instant et l'amplitude d'un maximum d'impulsion de tension et/ou sur l'allure de la chute d'amplitude de l'impulsion de tension et/ou sur l'instant d'atteinte d'un état final et/ou sur les propriétés de l'état final et/ou sur une largeur de l'impulsion de tension,
l'allure de la déviation de la tension d'électrode concernant l'état final étant décrite au moyen des paramètres d'adaptation obtenus par l'adaptation ou au moyen de paramètres de fonction de remplacement.

6. Procédé (100) selon la revendication 5,
pour lequel l'adaptation a recours au moins dans un premier intervalle de temps à une fonction avec un extremum global, par exemple une fonction de Gauss.

7. Procédé (100) selon l'une des revendications 5 ou 6,
pour lequel l'adaptation a recours au moins dans un premier intervalle de temps à une fonction décroissante de façon monotone, par exemple une fonction de puissance.

8. Procédé (100) selon l'une des revendications 5 à 7,
pour lequel les fonctions d'adaptation ou les paramètres de fonction d'adaptation sont sélectionnés à partir d'un tableau de référence.

9. Procédé (100) selon l'une des revendications 5 à 8,
pour lequel au moins un paramètre typique de l'appareil et/ou typique de l'exemplaire et/ou spécifique à l'application est utilisé pour l'adaptation ou lors de la sélection de la fonction d'adaptation.

10. Procédé (100) selon l'une des revendications 5 à 9,
pour lequel une valeur mesurée d'une première impédance d'un circuit électrique comprenant les électrodes de mesure (31, 32) ainsi que les lignes d'alimentation (34) des électrodes de mesure vers le circuit de mesure / commande (50) ainsi que le produit et/ou une deuxième impédance du produit sont utilisés pour l'adaptation ou pour une sélection de la fonction d'adaptation.

11. Procédé (100) selon l'une des revendications précédentes,
pour lequel la valeur mesurée de la première impédance est déterminée au moyen des électrodes de mesure et/ou
pour lequel la valeur mesurée de la deuxième impédance est déterminée au moyen d'une sonde d'impédance (60).

12. Procédé (100) selon l'une des revendications précédentes,
pour lequel les valeurs des champs magnétiques des phases de mesure de phases d'alimentation voisines diffèrent de moins de 1 % et notamment de moins de 0,1 %.

13. Procédé (100) selon l'une des revendications 2 à 12,
pour lequel les phases d'alimentation utilisées pour le calcul de la déviation moyennée précèdent la première phase d'alimentation ou englobent la première phase d'alimentation.

14. Procédé (100) selon l'une des revendications 2 à 13,
pour lequel les phases d'alimentation utilisées pour le calcul de la déviation moyennée précèdent au moins partiellement la première phase d'alimentation, pour lequel les phases d'alimentation utilisées pour le calcul de la déviation moyennée suivent au moins partiellement la première phase d'alimentation.

15. Procédé (100) selon l'une des revendications précédentes,
pour lequel une différence de valeurs mesurées de la tension d'électrode ou une différence de tensions d'électrode des phases de mesure de deux phases d'alimentation consécutives est utilisée pour déterminer une valeur mesurée de débit.

16. Débitmètre magnéto-inductif (1) destiné à la mesure de la vitesse d'écoulement ou du débit volumique d'un produit dans un tube de mesure (10), comprenant :
un tube de mesure, lequel est conçu pour guider le produit ;
un système magnétique (20) avec au moins un système de bobines (21, 22),
lequel système magnétique est conçu pour générer un champ magnétique dans le produit, le champ magnétique étant pour l'essentiel perpendiculaire à un axe de tube de mesure ;
au moins une paire d'électrodes de mesure (31, 32) disposées dans le tube de mesure (10), laquelle paire est conçue pour mesurer une tension induite par le champ magnétique dans le produit, laquelle tension d'électrode est pour l'essentiel proportionnelle à la vitesse d'écoulement et à l'intensité du champ magnétique ;
un circuit de mesure / commande (50), lequel circuit est conçu pour mettre en oeuvre le procédé (100) selon la revendication 1.

17. Débitmètre (1) selon la revendication 16,
pour lequel le débitmètre comprend une sonde d'impédance (60) destinée à la mesure de la deuxième impédance du produit, le circuit de mesure / commande (50) étant conçu pour commander la sonde d'impédance.

18. Débitmètre (1) selon la revendication 16 ou 17,
pour lequel le circuit de mesure / de commande (50) comprend une interface (S) destinée à la transmission ou à la réception d'informations concernant une impédance du produit déterminée de façon externe.
